# EUROPÄISCHE PATENTSCHRIFT

(11) **EP 1 561 227 B1**
(45) Veröffentlichungstag und Bekanntmachung des Hinweises auf die Patenterteilung: **02.05.2007**
(21) Anmeldenummer: 03778254.7
(22) Anmeldetag: 11.11.2003
(51) Int. Cl.: H01H 25/00

(54) **ELEKTRISCHER SCHALTER**
ELECTRIC SWITCH
COMMUTATEUR ELECTRIQUE

(30) Priorität: 16.11.2002 DE 10253462
(43) Veröffentlichungstag der Anmeldung: 10.08.2005
(60) Teilanmeldung: 06019242.4
(73) Patentinhaber: Delphi Technologies Inc., Troy, MI 48007 (US)
(72) Erfinder: RUDOLPH, Gerd, 55459 Aspisheim (DE); TREIN, Andreas, 55618 Simmertal (DE)
(74) Vertreter: Becker, Bernd
(86) Internationale Anmeldenummer: PCT/DE2003/003730
(87) Internationale Veröffentlichungsnummer: WO 2004/047134

(56) Entgegenhaltungen:
- EP-A- 0 901 262
- DE-U- 20 206 744
- US-A1- 2001 019 012

## Beschreibung

Die Erfindung bezieht sich auf einen elektrischen Schalter, insbesondere Lenkradschalter, mit einem schwenk- und drehbar in einem Gehäuse gelagerten, durch Druck und Drehung beaufschlagbaren Betätigungselement, das in einem schwenkbaren Schaltrahmen drehbar gelagert ist.

Aus der Praxis ist ein elektrischer Schalter bekannt, der zur Leuchweitenregulierung von Frontscheinwerfern eines Kraftfahrzeuges dient und dessen walzenförmiges Betätigungselement um seine Längsachse drehbar gelagert ist. Die Drehung des Betätigungselementes ist bei diesem Schalter beschränkt, da die Frontscheinwerfer nur um einen bestimmten Winkel verschwenkt werden dürfen. Eine Druckbeaufschlagung des Betätigungselementes zur Realisierung weiterer Schaltfunktionen ist nicht vorgesehen.

Im Weiteren ist ein Schalter der eingangs genannten Art durch seine Verwendung in einer Computer-Maus bekannt. Das radförmige Betätigungselement, ein so genanntes Scroll-Rad, dient zur Bildschirmsteuerung und ist durch Drehung oder Druck beaufschlagbar. Hierzu ist das Betätigungselement jeweils stirnseitig in einem Gehäuse der Computer-Maus sowohl drehbar als auch in Druckrichtung vertikal verschiebbar gelagert. Das Betätigungselement befindet sich in einer Stützvorrichtung unter der ein Mikroschalter angeordnet ist. Aufgrund der übereinander liegenden Anordnung von Betätigungselement, Stützvorrichtung und Mikroschalter weist dieser Schalter einen relativ hohen Aufbau auf.

Darüber hinaus offenbart die EP 0 901 262 A2 einen elektrischen Schalter der gattungsgemäßen Art, bei dem das Betätigungselement um 360° drehbar gelagert ist und mehrere jeweils 30° umfassende Schaltsegmente aufweist, um eine entsprechende Menü-Steuerung vorzunehmen.

Ferner ist aus der US 2001/0019012 A1 ein elektrischer Schalter mit einem schwenk- und drehbar in einem Gehäuse gelagerten, durch Druck und Drehung beaufschlagbaren Betätigungselement bekannt, wobei das Betätigungselement mittels einer flexiblen Achse drehbar gelagert ist.

Schließlich zeigt die DE 202 06 744 U1 einen elektrischen Schalter, dessen Betätigungselement an einer seiner Stirnseiten ein zahnkranzartiges Nockenrad aufweist, dem ein in dieses eingreifender schwenkbarer Schaltnocken zur alternativen Betätigung von zwei Schaltkontakten in Abhängigkeit von der Drehrichtung zugeordnet ist.

Es ist Aufgabe der Erfindung, einen elektrischen Schalter der eingangs genannten Art zu schaffen, der einfach zu handhaben ist und einen kompakten Aufbau aufweist.

Erfindungsgemäß wird die Aufgabe dadurch gelöst, dass dem Betätigungselement im Bereich eines Lagerschenkels des Schaltrahmens eine mit dem Betätigungselement zusammenwirkende Rückstelleinrichtung zur Erzielung einer getasteten Drehbewegung zugeordnet ist, wobei die Rückstelleinrichtung eine gehäuseseitige Schaltkulisse und eine druckfederbelastete Rasthülse umfasst, die in die eine dem einen Lagerschenkel zugewandte Stirnseite des walzen- oder radförmigen Betätigungselementes derart eingesetzt ist, dass sie über den Lagerschenkel hervorsteht und mit der Schaltkulisse zusammenwirkt.

Somit führt das Betätigungselement bei einer Druckbeaufschlagung eine Schwenkbewegung aus, weshalb es nicht erforderlich ist ein dieser Beaufschlagungsrichtung zugeordnetes Schaltelement direkt unterhalb des Betätigungselementes anzuordnen. Vielmehr ist eine Platzierung des Schaltelementes versetzt zum Betätigungselement möglich, wodurch der Schalter eine relativ geringe Bauhöhe und damit einen kompakten Aufbau aufweist. Mit einem solchen Schalter wird beispielsweise durch die Druckbeaufschlagung eine erste Schaltfunktion ausgeführt, die eine zweite, durch eine Drehung des Betätigungselementes auszuführende Schaltfunktion aktiviert. Es ist z.B. möglich, durch ein Drücken des Betätigungselementes eine Steuerung eines Bordcomputers eines Kraftfahrzeuges zu aktivieren und eine Navigation durch ein Menü des Bordcomputers durch ein anschließendes Drehen des Betätigungselementes in die eine oder andere Richtung vorzunehmen. Sonach ist eine versehentliche Navigation ausgeschlossen. Selbstverständlich ist auch eine gleichzeitige Beaufschlagung durch Druck und Drehung des Betätigungselementes möglich. Mittels der Rückstelleinrichtung ist die Größe der Drehbewegung des Betätigungselementes bzw. dessen maximaler Drehwinkel definiert und es ist eine zwangsweise Rückstellung Betätigungselementes aus einer Drehbeaufschlagung gewährleistet. Hierbei ist die Rückstelleinrichtung derart ausgeführt, dass das Betätigungselement aus einer Ausgangslage getastet hin und her gedreht werden kann.

Zur Bereitstellung einer relativ einfach zu fertigenden Lagerstelle, die zum einen eine Beaufschlagung des Betätigungselementes in Drehrichtung und zum anderen in Druckrichtung gewährleistet, ist vorzugsweise der Schaltrahmen über parallel zur Drehachse des Betätigungselementes angeordnete Klipsverbindungen an das Gehäuse angelenkt ist.

Zweckmäßigerweise umfasst der Schaltrahmen einen Klipsschenkel und einen Betätigungsschenkel, die über Lagerschenkel parallel sowie beabstandet zueinander gehalten sind, wobei die gegenüberliegenden Lagerschenkel Lagerstellen für das Betätigungselement aufweisen. Das Betätigungselement kann beispielsweise mit Trägerachsstummeln in entsprechende Öffnungen der Lagerschenkel drehbar eingesetzt werden.

Zur Bereitstellung einer schwenkbaren Lagerung des Schaltrahmens weist der im Querschnitt zylindrische Klipsschenkel zueinander beabstandete Einstiche auf, in die gehäuseseitige Klipsarme eingreifen.

Bevorzugt dient der im Querschnitt zylindrische Betätigungsschenkel als Betätiger für ein erstes Schaltelement bei einer Druckbeaufschlagung des Betätigungselementes. Aufgrund des zylindrischen Querschnittes beaufschlagt der Betätigungsschenkel des Schaltrahmens das zugeordnete erste Schaltelement linienförmig. Selbstverständlich ist es möglich dem Betätigungsschenkel mehrere Schaltelemente und/oder Rückstellelemente zuzuordnen.

Zweckmäßigerweise ist das erste Schaltelement als dem Sockel zugeordneter Tastschalter ausgebildet. Dem Tastschalter können mehrere durch Mehrfachbeaufschlagung auszulösende Schaltfunktonen zugeordnet sein.

Zur Rückstellung des Betätigungselementes über den Betätiger nach einem Loslassen umfasst der Tastschalter einen in einem Dom einer flexiblen Schaltmatte angeordneten Schaltkontakt zur Beaufschlagung eines zugeordneten Festkontaktes. Die Rückstellkraft wird durch die Schaltmatte bewirkt.

Vorzugsweise weist das Betätigungselement auf der dem Betätiger zugeordneten Stirnseite in Umfangsrichtung weisende Schaltnocken zur Beaufschlagung eines zweiten Schaltelementes bei einer Drehung des Betätigungselementes auf. Bevorzugt ist das zweite Schaltelement als dem Sockel zugeordneter 2-Wege-Schaltdetektor ausgebildet, dessen Schaltarm mit den Schaltnocken des Betätigungselementes zusammenwirkt. Die Stellung der Schaltnocken korrespondiert zu den durch die Rastkurve vorgegebenen Drehschritten des Betätigungselementes. Der 2-Wege-Schaltdetektor registriert sowohl die Drehrichtung als auch die durch die Schaltnocken bewirkten Beaufschlagungen.

Zweckmäßigerweise stehen das erste Schaltelement und das zweite Schaltelement mit einer im Sockel angeordneten Leiterplatte in Verbindung. Zur Realisierung weiterer Funktionen des Schalters sind auf der Leiterplatte weitere Einzelschalter und/oder Leuchtdioden befestigt.

Um eine leichte Bedienbarkeit sicherzustellen, ist das Gehäuse mit einem eine Öffnung für das Betätigungselement aufweisenden Deckel versehen, wobei das Betätigungselement abschnittsweise durch die Öffnung ragt. Ferner ist die Umfangsfläche des Betätigungselementes genoppt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigen:

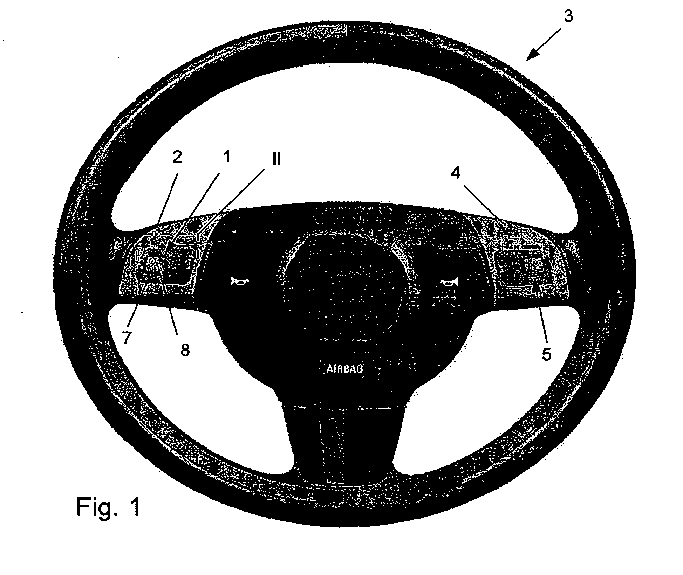

- Fig.1: eine Darstellung eines Lenkrades eines Kraftfahrzeuges mit einem erfindungsgemäßen elektrischen Schalter,

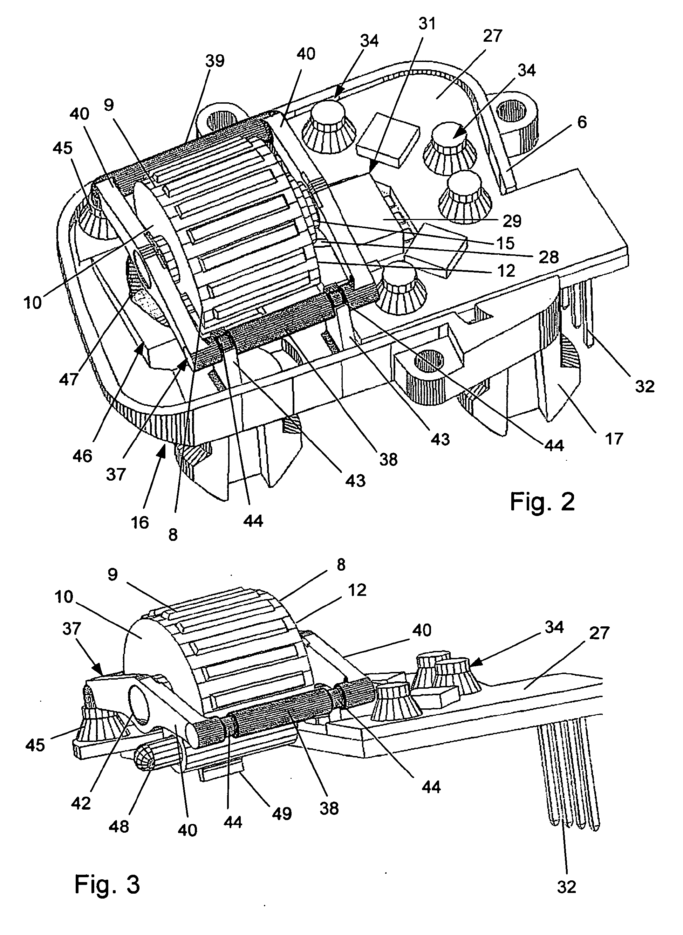

- Fig.2: eine vergrößerte Teildarstellung einer perspektivischen Ansicht einer Einzelheit II nach Fig. 1 von oben,
- Fig.3: eine vergrößerte Teildarstellung einer perspektivischen Ansicht der Teildarstellung nach Fig. 2,

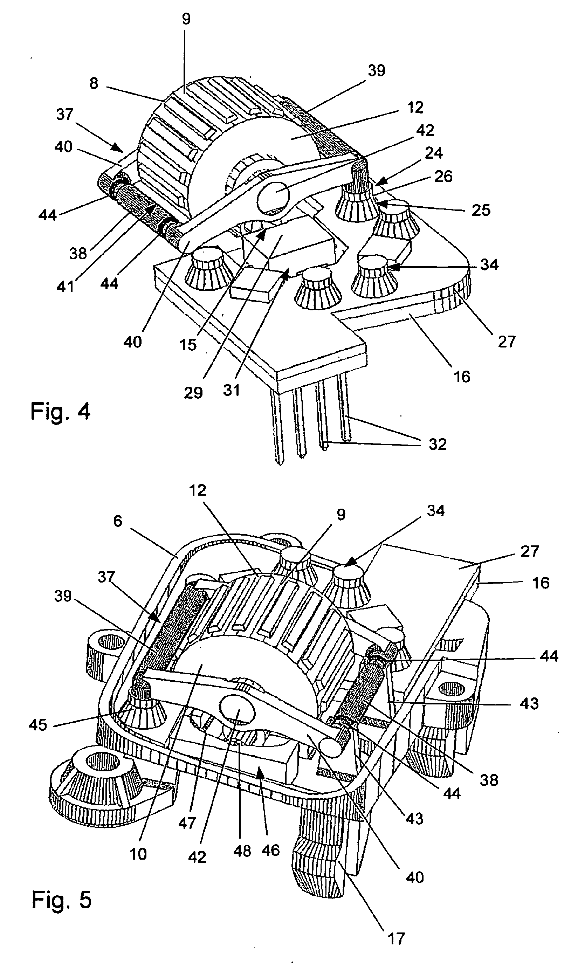

- Fig.4: eine vergrößerte Teildarstellung einer weiteren perspektivischen Ansicht der Teildarstellung nach Fig. 2 und
- Fig.5: eine vergrößerte Teildarstellung einer weiteren perspektivischen Ansicht der Teildarstellung nach Fig. 2.

Der erfindungsgemäße Schalter 1 ist als Lenkradschalter in eine Speiche 2 eines Lenkrades 3 eines Kraftfahrzeuges eingebaut. In der anderen Speiche 4 befindet sich ein Drehschalter 5.

Der Schalter 1 umfasst ein Gehäuse 6 mit einem eine Öffnung aufweisenden Deckel, wobei ein walzenförmiges Betätigungselement 8 mit genoppter Umfangsfläche 9 abschnittsweise durch die Öffnung ragt. Das Betätigungselement 8 ist dreh- und schwenkbar in dem Gehäuse 6 gelagert. Ein dem Gehäuse 6 zugeordneter Sockel 16 umfasst Klipsarme 17 zur Befestigung des Schalters 1 in der Speiche 2.

Das Betätigungselement 8 ist in einem schwenkbaren Schaltrahmen 37 drehbar gelagert. Der einstückige Schaltrahmen 37 umfasst einen Klipsschenkel 38 und einen Betätigungsschenkel 39, die über Lagerschenkel 40 derart parallel sowie beabstandet zueinander gehalten sind, dass sie eine Öffnung 41 bilden, in die das Betätigungselement 8 eingesetzt ist, wobei die Stirnseiten 10, 12 des Betätigungselementes 8 parallel zu den Lagerstellen 42 für das Betätigungselement 8 aufweisenden Lagerschenkeln 40 angeordnet sind. Der Klipsschenkel 38 und der Betätigungsschenkel 39 sind jeweils rechtwinklig zu den Lagerschenkeln 40 angeordnet. Zur Lagerung des Schaltrahmens 40 ist der Sockel 16 des Gehäuses 6 mit zueinander beabstandeten Klipsarmen 43 versehen, die in Einstiche 44 des Klipsschenkels 38 eingreifen, um den Schaltrahmen 40 schwenkbar in dem Gehäuse 6 zu haltern. Bei einer Druckbeaufschlagung des Betätigungselementes 8 verschwenkt der Schaltrahmen 40 mitsamt dem Betätigungselement 8, so dass der Betätigungsschenkel 39 das erste Schaltelement 24 beaufschlagt, in dem er einen zugeordneten Dom 26 niederdrückt, wobei das erste als Tastschalter 25 ausgebildete Schaltelement 24 aus einem in dem Dom 26 einer flexiblen Schaltmatte 27 angeordneten Schaltkontakt zur Kontaktierung eines zugeordneten Festkontaktes zusammengesetzt ist. Beim Loslassen des Betätigungselementes 8 wird dasselbe durch die Rückstellkraft des Domes 26 der Schaltmatte 27 über den Betätiger 22 in seine Ausgangslage verschwenkt. Ein zweiter, dem Betätigungsschenkel 39 zugeordneter Dom 45 kann ebenfalls mit einem Schaltelement versehen sein oder lediglich zur Rückstellung des Betätigungselementes 8 bzw. Erzeugung einer vorgegebenen Schaltkraft dienen.

Um eine getastete Drehbewegung des Betätigungselementes 8 aus einer Ausgangsstellung in die eine oder andere Richtung zu realisieren, ist im Bereich des einen Lagerschenkels 40 eine mit dem Betätigungselement 8 zusammenwirkende Rückstelleinrichtung 46 angeordnet. Die Rückstelleinrichtung 46 umfasst eine gehäuseseitige Schaltkulisse 47, in die eine in die entsprechende Stirnseite 10 des Betätigungselementes 8 teilweise eingesetzte, druckfederbelastete Rasthülse 48 eingreift, die auf der dem Sockel 16 zugewandten Seite des Lagerschenkels 40 über denselben vorsteht. Bei einer Drehbeaufschlagung des Betätigungselementes 8 gleitet die Rasthülse 48 entgegen der Wirkung der ihr zugeordneten Druckfeder in der Schaltkulisse 47 bis sie an deren Ende anschlägt. Hierbei betätigen Schaltnocken 15 auf der der Rasthülse 48 gegenüberliegenden Stirnseite 12 des Betätigungselementes 8 einen Schaltarm 28 eines dem Sockel 16 zugeordneten zweiten Schaltelementes 31, das als 2-Wege-Schaltdetektor 29 ausgeführt ist. Beim Loslassen des Betätigungselementes 8 kehrt dieses aufgrund der Wirkung der Rückstelleinrichtung 46 in seine Ausgangsstellung zurück. Zur Begrenzung der Drehbewegung weist das Betätigungselement 8 einen Anschlag 49 auf, der mit dem Sockel 16 zusammenwirkt.

Der Tastschalter 25 und der 2-Wege-Schaltdetektor 29 sind mit einer Anschlusskontakte 32 aufweisenden sockelseitigen Leiterplatte 33 verbunden, der weitere Einzelschalter 34 zugeordnet sind.

## Patentansprüche

1. Elektrischer Schalter, insbesondere Lenkradschalter, mit einem schwenk- und drehbar in einem Gehäuse (6) gelagerten, durch Druck und Drehung beaufschlagbaren Betätigungselement (8), das in einem schwenkbaren Schaltrahmen (37) drehbar gelagert ist, **dadurch gekennzeichnet, dass** dem Betätigungselement (8) im Bereich eines Lagerschenkels (40) des Schaltrahmens (37) eine mit dem Betätigungselement (8) zusammenwirkende Rückstelleinrichtung (46) zur Erzielung einer getasteten Drehbewegung zugeordnet ist, wobei die Rückstelleinrichtung (46) eine gehäuseseitige Schaltkulisse (47) und eine druckfederbelastete Rasthülse (48) umfasst, die in die eine dem einen Lagerschenkel (40) zugewandte Stirnseite (10) des walzen- oder radförmigen Betätigungselementes (8)derart eingesetzt ist, dass sie über den Lagerschenkel (40) hervorsteht und mit der Schaltkulisse (47) zusammenwirkt.

2. Schalter nach Anspruch 1, **dadurch gekennzeichnet, dass** der Schaltrahmen (37) über parallel zur Drehachse des Betätigungselementes (8) angeordnete Klipsverbindungen an das Gehäuse (6) angelenkt ist.

3. Schalter nach Anspruch 1 oder 2, **dadurch gekennzeichnet, dass** der Schaltrahmen (37) einen Klipsschenkel (38) und einen Betätigungsschenkel (39) umfasst, die über Lagerschenkel (40) parallel sowie beabstandet zueinander gehalten sind, wobei die gegenüberliegenden Lagerschenkel (40) Lagerstellen (42) für das Betätigungselement (8) aufweisen.

4. Schalter nach Anspruch 3, **dadurch gekennzeichnet, dass** der im Querschnitt zylindrische Klipsschenkel (38) zu einander beabstandete Einstiche (44) aufweist, in die gehäuseseitige Klipsarme (43) eingreifen.

5. Schalter nach Anspruch 3, **dadurch gekennzeichnet, dass** der im Querschnitt zylindrische Betätigungsschenkel (39) als Betätiger (22) für ein erstes Schaltelement (24) bei einer Druckbeaufschlagung des Betätigungselementes (8) dient.

6. Schalter nach Anspruch 5, **dadurch gekennzeichnet, dass** das erste Schaltelement (24) als dem Sockel (16) zugeordneter Tastschalter (25) ausgebildet ist.

7. Schalter nach Anspruch 6, **dadurch gekennzeichnet, dass** der Tastschalter (25) einen in einem Dom (26) einer flexiblen Schaltmatte (27) angeordneten Schaltkontakt zur Beaufschlagung eines zugeordneten Festkontaktes umfasst.

8. Schalter nach einem der Ansprüche 1 bis 7, **dadurch gekennzeichnet, dass** das Betätigungselement (8) auf der anderen Stirnseite (12) in Umfangsrichtung weisende Schaltnocken (15) zur Beaufschlagung eines zweiten Schaltelementes (31) bei einer Drehung des Betätigungselementes (8) aufweist.

9. Schalter nach Anspruch 8, **dadurch gekennzeichnet, dass** das zweite Schaltelement (31) als dem Sockel (16) zugeordneter 2-Wege-Schaltdetektor (29) ausgebildet ist, dessen Schaltarm (28) mit den Schaltnocken (15) des Betätigungselementes (8) zusammenwirkt.

10. Schalter nach einem der Ansprüche 5 bis 9, **dadurch gekennzeichnet, dass** das erste Schaltelement (24) und das zweite Schaltelement (31) mit einer im Sockel (16) angeordneten Leiterplatte (33) in Verbindung stehen.

11. Schalter nach Anspruch 10, **dadurch gekennzeichnet, dass** auf der Leiterplatte (33) weitere Einzelschalter (34) und/oder Leuchtdioden (35) befestigt sind.

12. Schalter nach einem der Ansprüche 1 bis 11, **dadurch gekennzeichnet, dass** das Gehäuse (6) mit einem eine Öffnung (36) für das Betätigungselement (8) aufweisenden Deckel (7) versehen ist, wobei das Betätigungselement (8) abschnittsweise durch die Öffnung (36) ragt.

13. Schalter nach einem der Ansprüche 1 bis 12, **dadurch gekennzeichnet, dass** die Umfangsfläche des Betätigungselementes (9) genoppt ist.

## Claims

1. Electric switch, in particular steering-wheel switch, having an actuating element (8) mounted pivotably and rotatably in a housing (6) and which can be acted upon by pressure and rotation, and which is mounted rotatably in a pivotable switch frame (37), **characterised in that** a resetting device (46) cooperating with the actuating element (8) is assigned to the actuating element (8) in the region of a support limb (40) of the switch frame (37) to achieve a keyed rotary movement, wherein the resetting device (46) comprises a housing-side gear-shifting gate (47) and a compression spring-loaded locking sleeve (48), which is inserted into the one end-face side (10) of the drum-like or wheel-like actuating element (8) facing the one support limb (40) such that it projects beyond the support limb (40) and cooperates with the gear-shifting gate (47).

2. Switch according to claim 1, **characterised in that** the switch frame (37) is coupled to the housing (6) via clip connections arranged parallel to the axis of rotation of the actuating element (8).

3. Switch according to claim 1 or 2, **characterised in that** the switch frame (37) comprises a clip limb (38) and an actuating limb (39), which are mounted parallel and spaced from one another via support limbs (40), wherein the opposing support limbs (40) have support points (42) for the actuating element (8).

4. Switch according to claim 3, **characterised in that** the cylindrical-cross-section clip limb (38) has recesses (44) spaced from one another, into which housing-side clip arms (43) engage.

5. Switch according to claim 3, **characterised in that** the cylindrical-cross-section actuating limb (39) serves as actuator (22) for a first switch element (24) during pressure action on the actuating element (8).

6. Switch according to claim 5, **characterised in that** the first switch element (24) is designed as a key switch (25) assigned to the base (16).

7. Switch according to claim 6, **characterised in that** the key switch (25) comprises a switch contact arranged in a dome (26) of a flexible switch mat (27) to act on an assigned fixed contact.

8. Switch according to one of claims 1 to 7, **characterised in that** the actuating element (8) has trip cams (15) pointing in peripheral direction on the other end-face side (12) to act on a second switch element (31) during rotation of the actuating element (8).

9. Switch according to claim 8, **characterised in that** the second switch element (31) is designed as a 2-way switch detector (29) assigned to the base (16), the switch arm (28) of which 2-way switch detector (29) cooperates with the trip cam (15) of the actuating element (8).

10. Switch according to one of claims 5 to 9, **characterised in that** the first switch element (24) and the second switch element (31) are connected to a printed circuit board (33) arranged in the base (16).

11. Switch according to claim 10, **characterised in that** further individual switches (34) and/or light-emitting diodes (35) are attached to the printed circuit board (33).

12. Switch according to one of claims 1 to 11, **characterised in that** the housing (6) is provided with a cover (7) having an opening (36) for the actuating element (8), wherein the actuating element (8) projects in sections through the opening (36).

13. Switch according to one of claims 1 to 12, **characterised in that** the peripheral surface of the actuating element (9) is burled.

## Revendications

1. Commutateur électrique, en particulier commutateur de volant, comportant un élément d'actionnement (8) monté pivotant et tournant dans un boîtier (6), à actionner par pression et rotation, et qui est monté tournant dans un cadre de commutation (37) pivotant, **caractérisé en ce que** dans la zone d'un côté d'appui (40) du cadre de commutation (37), à l'élément d'actionnement (8) est associé un dispositif de rappel (46) coopérant avec l'élément d'actionnement (8), pour obtenir un mouvement de rotation à impulsions, le dispositif de rappel (46) comprenant une coulisse de commutation (47) côté boîtier et une douille d'arrêt (48) soumise à l'action d'un ressort de pression, laquelle est insérée dans un côté frontal (10), tourné vers le côté d'appui (40), de l'élément d'actionnement (8) en forme de cylindre ou de roue, de sorte qu'elle fasse saillie sur le côté d'appui (40) et coopère avec la coulisse de commutation (47).

2. Commutateur selon la revendication 1, **caractérisé en ce que** le cadre de commutation (37) est articulé au boîtier (6) par des liaisons clipsées disposées parallèlement à l'axe de rotation de l'élément d'actionnement (8).

3. Commutateur selon la revendication 1 ou 2, **caractérisé en ce que** le cadre de commutation (37) comprend un côté de clipsage (38) et un côté d'actionnement (39) qui sont maintenus parallèlement et écartés l'un de l'autre par des côtés d'appui (40), les côtés d'appui (40) opposés comportant des points d'appui (42) pour l'élément d'actionnement (8).

4. Commutateur selon la revendication 3, **caractérisé en ce que** le côté de clipsage (38) de section transversale cylindrique présente des entailles (44) espacées les unes des autres dans lesquelles s'engagent des bras de clipsage (43) côté boîtier.

5. Commutateur selon la revendication 3, **caractérisé en ce que** le côté d'actionnement (39) de section transversale cylindrique sert d'actionneur (22) pour un premier élément de commutation (24) lorsque l'élément d'actionnement (8) est soumis à une pression.

6. Commutateur selon la revendication 5, **caractérisé en ce que** le premier élément de commutation (24) est réalisé sous la forme d'un commutateur à impulsions (25) associé au socle (16).

7. Commutateur selon la revendication 6, **caractérisé en ce que** le commutateur à impulsions (25) comprend un contact de commutation disposé dans un dôme (26) d'une natte de commutation (27) flexible pour agir sur un contact fixe associé.

8. Commutateur selon l'une des revendications 1 à 7, **caractérisé en ce que** l'élément d'actionnement (8) comporte des cames de commutation (15), dirigées dans la direction périphérique sur l'autre côté frontal (12), pour agir sur un second élément de commutation (31) lors d'une rotation de l'élément d'actionnement (8) .

9. Commutateur selon la revendication 8, **caractérisé en ce que** le second élément de commutation (31) est réalisé sous la forme d'un détecteur de commutation à 2 voies (29) associé au socle (16), dont le bras de commutation (28) coopère avec les cames de commutation (15) de l'élément d'actionnement (8).

10. Commutateur selon l'une des revendications 5 à 9, **caractérisé en ce que** le premier élément de commutation (24) et le second élément de commutation (31) sont en liaison avec une plaquette à circuit imprimé (33) disposée dans le socle (16).

11. Commutateur selon la revendication 10, **caractérisé en ce que** d'autres commutateurs individuels (34) et/ou diodes luminescentes (35) sont fixées sur la plaquette à circuit imprimé (33).

12. Commutateur selon l'une des revendications 1 à 11, **caractérisé en ce que** le boîtier (6) est pourvu d'un couvercle (7) présentant une ouverture (36) pour l'élément d'actionnement (8), l'élément d'actionnement (8) traversant par endroits l'ouverture (36).

13. Commutateur selon l'une des revendications 1 à 12, **caractérisé en ce que** la surface périphérique de l'élément d'actionnement (9) est cannelé.
